# EUROPÄISCHE PATENTANMELDUNG

(11) **EP 3 293 707 A1**
(43) Veröffentlichungstag der Anmeldung: **14.03.2018**
(21) Anmeldenummer: 17174026.9
(22) Anmeldetag: 01.06.2017
(51) Int. Cl.: G07C 9/00, H04L 12/28, H04W 4/00

(54) **SCHLIESSANLAGE UND VERFAHREN ZUM BETRIEB EINER SCHLIESSANLAGE FÜR EINE GEBÄUDETÜR**

(30) Priorität: 07.09.2016 DE 102016116699
(71) Anmelder: Carl Fuhr GmbH & Co. KG, 42579 Heiligenhaus (DE)
(72) Erfinder: Tönges, Reiner, 42579 Heiligenhaus (DE); Meis, Guido, 50737 Köln (DE)
(74) Vertreter: von dem Borne, Andreas

(57) **Zusammenfassung**

Die Erfindung betrifft eine Schließanlage für eine Gebäudetür (1) mit zumindest
- einer Schließeinrichtung, z. B. einem motorbetriebenen Schloss (2),
- einer Steuerung (3) mit z. B. einem Empfänger für den Empfang eines Öffnungssignals (6) per Funk,
- einem in Reichweite der Steuerung (3) bzw. des Empfängers angeordneten Kommunikationsmodul (5) als Netzwerkserver, welches ein Gehäuse (13) aufweist und z. B. welches in ein lokales Funknetzwerk eingebunden ist und außerdem einen Sender für die Übermittlung eines Öffnungssignals (6) per Funk an den Empfänger der Steuerung (3) aufweist und
- zumindest einem als Netzwerkclient arbeitenden Endgerät (7), welches in dem Kommunikationsmodul (5) angemeldet wird.

Diese Schließanlage ist **dadurch gekennzeichnet,** dass das Kommunikationsmodul (5) als Türmodul ausgebildet und derart an oder neben der Gebäudetür befestigbar ist, dass es von der Türaußenseite sichtbar ist. - Fig. 1

## Beschreibung

Die Erfindung betrifft eine Schließanlage für eine Gebäudetür, mit zumindest
- einer Schließeinrichtung, z. B. einem motorbetriebenen Schloss,
- einer Steuerung für die Schließeinrichtung,
- einem Kommunikationsmodul als Netzwerkserver, welches ein Gehäuse aufweist und welches in ein lokales Funknetzwerk eingebunden ist oder ein solches aufspannt und mit dem ein Öffnungssignal an die Steuerung übermittelbar ist und
- zumindest einem als Netzwerkclient arbeitenden Endgerät, welches in der Kommunikationseinheit angemeldet wird oder als autorisiert gespeichert ist.

Schließanlage meint im Rahmen der Erfindung insbesondere eine Türschließanlage einer sicherheitsrelevanten Tür, z. B. einer Eingangstür eines Einfamilienhauses oder Mehrfamilienhauses oder auch eines gewerblich genutzten oder öffentlichen Gebäudes. Eine solche Türschließanlage weist zumindest einen Verriegelungsmechanismus zum Verriegeln und Entriegeln der Tür auf. Ergänzend oder alternativ zu mechanischen Zutrittskontrollsystemen (insbesondere Schlüsseln) sind in der Praxis häufig andere Identifizierungsvorrichtungen (Fingerscanvorrichtungen, Transponder, Funkschlüssel oder dergleichen) vorgesehen, so dass sich die Schließanlage auch ohne mechanische Schlüssel von berechtigten Personen öffnen lässt. Dazu ist das Schloss (das z. B. als Mehrfachverriegelung ausgebildet sein kann) motorbetrieben, so dass z. B. ein (separates) Motoraggregat vorgesehen sein kann, mit dem zumindest eine Entriegelung des Schlosses (sowie gegebenenfalls auch eine Verriegelung) möglich ist. Die Steuerung kann in das Schloss bzw. in das Motoraggregat integriert sein. Alternativ wird eine separate Steuerung vorgesehen, die z. B. im Türblatt oder im Türrahmen angeordnet sein kann und per Kabel oder kabellos den Motor (z. B. zum Entriegeln des Schlosses) ansteuert. In der Steuerung können die verschiedenen zutrittsberechtigten elektronischen Schlüssel (z. B. Funkhandsender, Transponder oder Funk-Fingerscanvorrichtung) gespeichert sein.

Die Funktionalität einer solchen Schließanlage wird dadurch erhöht, dass gleichsam als zusätzlicher elektronischer Schlüssel ein Kommunikationsmodul als Netzwerkserver vorgesehen ist, dass - sowie gegebenenfalls auch andere elektronische Schlüssel - als "zutrittsberechtigt" in der Steuerung gespeichert wird. Grundsätzlich kann das Öffnungssignal von dem Kommunikationsmodul an die Steuerung (der Schließeinrichtung) in beliebiger Form, das heißt drahtgebunden oder drahtlos übertragen werden, wobei bevorzugt eine manipulationsgeschützte Datenübertragung vorgesehen ist. Besonders bevorzugt erfolgt die Übertragung des Öffnungssignals (drahtlos) per Funk. Bei dieser bevorzugten Ausführungsform weist die Steuerung zumindest einen Empfänger für den Empfang des Öffnungssignals per Funk auf. Das Kommunikationsmodul ist in Reichweite der Steuerung bzw. des Empfängers angeordnet und dieses Kommunikationsmodul weist einen Sender für die Übermittlung des Öffnungssignals per Funk an den Empfänger auf. Ein solches Kommunikationsmodul wird von der Carl Fuhr GmbH & Co. KG unter der Bezeichnung "SmartConnect" vermarktet. In diesem Kommunikationsmodul können mehrere Endgeräte (z. B. Smartphones) über eine App angemeldet werden, so dass über das Smartphone per Funknetzwerk (insbesondere WLAN) mit dem Kommunikationsmodul (SmartConnect) kommuniziert wird. Über das Smartphone kann z. B. ein Öffnungsbefehl an das Kommunikationsmodul übermittelt werden, wobei daraufhin von dem Kommunikationsmodul (per Funk) ein Öffnungssignal an die Steuerung übermittelt wird. Im Zuge der Installation wird das Kommunikationsmodul in der Steuerung (der Schließanlage) bzw. des Schlosses "angelernt". Anschließend lässt sich dann z. B. per Smartphone die Tür entriegeln, wobei das Smartphone entweder per WLAN mit der Kommunikationseinheit oder gegebenenfalls auch über das Internet und das lokale WLAN kommuniziert. Auf diese Weise können eine Vielzahl von Benutzern sehr einfach verwaltet werden, wobei lediglich ein einziges Kommunikationsmodul in der (herkömmlichen) Steuerung angelernt werden muss. Parallel dazu bleibt aber die Möglichkeit erhalten, das Schloss auch mit herkömmlichen Funkschlüsseln (z. B. Funkhandsendern, Transpondern, Funkfingerscannern), welche in der Steuerung angelernt werden, zu entriegeln. Dieses bekannte System auf Basis des "Fuhr-SmartConnect" hat sich in der Praxis hervorragend bewährt, es ist jedoch weiterentwicklungsfähig. - Hier setzt die Erfindung ein.

Der Erfindung liegt die Aufgabe zugrunde, eine Schließanlage für eine Gebäudetür der eingangs beschriebenen Art zu schaffen, welche sich durch verbesserte Funktionalität und einen hohen Bedienungskomfort auszeichnet.

Zur Lösung dieser Aufgabe lehrt die Erfindung bei einer gattungsgemäßen Schließanlage der eingangs beschriebenen Art, dass das Kommunikationsmodul als Türmodul ausgebildet und derart an oder neben der Gebäudetür befestigbar ist, dass es von der Türaußenseite sichtbar ist.

Erfindungsgemäß wird das Kommunikationsmodul folglich im Zuge der Montage fest im Bereich der Gebäudetür installiert, und zwar so, dass es von der Türaußenseite sichtbar und gegebenenfalls auch bedienbar ist. Dazu ist es grundsätzlich möglich, das Türmodul am Türrahmen oder neben dem Türrahmen zu installieren. Besonders bevorzugt ist das Türmodul jedoch als Türflügelmodul ausgebildet und an dem Türflügel bzw. dem Türblatt der Gebäudetür befestigt bzw. befestigbar, so dass das Türflügelmodul von der Türflügelaußenseite sichtbar und gegebenenfalls bedienbar ist. Eine solche Ausgestaltung hat den Vorteil, dass das Kommunikationsmodul weitere Funktionen übernehmen kann, indem z. B. weitere Komponenten in das Gehäuse des Kommunikationsmoduls integriert werden. So ist besonders bevorzugt vorgesehen, dass in das Gehäuse des Kommunikationsmoduls, welches als Türmodul bzw. Türflügelmodul ausgebildet ist, zumindest eine von einem Nutzer betätigbare Zutrittskontrollvorrichtung für die Schließeinrichtung integriert ist, mit welcher ein Öffnungssignal für die Schließeinrichtung erzeugbar ist. Dieses Öffnungssignal kann grundsätzlich in beliebiger Form, z. B. auch verkabelt, bevorzugt aber per Funk an die Schließeinrichtung bzw. deren Steuerung übertragen werden. Dabei ist eine manipulationsgeschützte Datenübertragung vorgesehen.

Zusätzlich zu der ohnehin vorhandenen Möglichkeit, die Tür über ein Endgerät (z. B. ein Smartphone) zu entriegeln, besteht erfindungsgemäß die Möglichkeit, die Tür auch ohne ein solches Endgerät direkt über eine in das Gehäuse integrierte Zutrittskontrollvorrichtung zu öffnen. Bei einer solchen Zutrittskontrollvorrichtung kann es sich z. B. um eine Fingerscanvorrichtung, eine Codeeingabeeinrichtung oder auch einen Transponderleser handeln. Solche Zutrittskontrollvorrichtungen sind grundsätzlich bekannt, sie werden jedoch erfindungsgemäß unmittelbar in das Kommunikationsmodul bzw. Türmodul integriert, so dass sie von der Türaußenseite zugänglich und damit bedienbar sind. Diese Zutrittskontrollvorrichtungen werden dann nicht - wie beim Stand der Technik - separat in der Steuerung der Schließeinrichtung angelernt, sondern Sie sind fester Bestandteil des Kommunikationsmoduls, so dass es ausreicht, das Kommunikationsmodul in der Steuerung anzulernen. Dabei kommunizieren diese Zutrittskontrollvorrichtungen auch nicht per Funk mit der Steuerung oder dem Kommunikationsmodul, sondern sie sind (kabelgebunden) in das Kommunikationsmodul integriert.

Vorteilhaft ist dabei die Tatsache, dass die verschiedenen Berechtigungen der in das Modul integrierten Zutrittskontrollvorrichtungen mehrerer Nutzer über das Endgerät (z. B. das Smartphone) programmierbar und in dem Kommunikationsmodul speicherbar sind.

Dieses hat den Vorteil, dass in dem Kommunikationsmodul nicht nur die einzelnen Zutrittskontrollvorrichtung verwaltet werden, sondern tatsächlich auch einzelne Nutzer, und zwar sehr bedienerfreundlich über das Endgerät, z. B. das Smartphone. Das Kommunikationsmodul lässt sich folglich - wie beim Stand der Technik - sehr einfach über eine App mit dem Endgerät, z. B. Smartphone, einrichten und steuern und in das Internet einbinden. Ergänzend besteht jedoch erfindungsgemäß die Möglichkeit, einzelne Benutzer zu verwalten und folglich Benutzerberechtigungen individuell zu vergeben, zu löschen, zeitlich zu begrenzen usw..

Ist z. B. als Zutrittskontrollvorrichtung eine Fingerscanvorrichtung vorgesehen, so können über das Endgerät bzw. über die App einzelne Benutzerfinger angelernt und verwaltet werden. Benutzerfinger können bei Bedarf gesperrt und gelöscht werden. Außerdem können verschiedenen Benutzerfingern unterschiedliche Öffnungszeiten zugeteilt werden. Über die App lässt sich außerdem (im Aktionsprotokoll) abfragen bzw. erkennen, mit welchem Benutzerfinger zu welchem Zeitpunkt bestimmte Aktionen, z. B. Öffnungen vorgenommen wurden. Optional besteht die Möglichkeit, dass von dem Kommunikationsmodul eine Meldung an das Endgerät übermittelt wird, wenn Manipulationen an der Fingerscanvorrichtung vorliegen. Durch diese Möglichkeit lässt sich der Bedienungskomfort einer Schließanlage erheblich erhöhen.

Die mit einer integrierten Fingerscanvorrichtung erreichten Vorteile lassen sich in entsprechender Weise auch bei anderen Zutrittskontrollvorrichtungen realisieren, z. B. bei einer Codeeingabeeinrichtung mit Zahlencodefeld. So können für verschiedene Benutzer verschiedene Öffnungscodes vergeben werden, die z. B. nur für bestimmte Zeiten gelten. Im Übrigen besteht die Möglichkeit, dass zusätzlich zu einer Tür auch andere Aktoren, z. B. ein Fensterkontakt, ein Garagenantrieb, ein Rolladenantrieb usw. bedient werden können. Jede Codeeingabe wird protokolliert, so dass umfassende Auswertungen möglich sind. Ähnlich variable Möglichkeiten ergeben sich beim Einsatz verschiedener Transponder, die individuell im Kommunikationsmodul angelernt werden können. So besteht die Möglichkeit, in das Kommunikationsmodul ein oder mehrere unsichtbare Spulen für Transponder bzw. NFC-Technik (Near Field Communication) zu integrieren.

Alternativ sind auch andere Zutrittskontrollvorrichtungen realisierbar, die z. B. über Gesichtserkennung und/oder Spracherkennung arbeiten.

Optional oder ergänzend können in dem Gehäuse des Kommunikationsmoduls eine Videokamera, eine Gegensprechanlage und/oder ein Bewegungssensor angeordnet sein. Über die Videokamera kann gegebenenfalls mittels Gesichtserkennung eine Zutrittskontrolleinrichtung realisiert werden. Es liegt jedoch auch im Rahmen der Erfindung, über die Videokamera, Informationen an das Endgerät, z. B. das Smartphone, zu übermitteln. So besteht z. B. die Möglichkeit, über die integrierte Kamera jederzeit auf dem Smartphone zu sehen, ob jemand und wer vor der Gebäudetür steht bzw. wer geklingelt hat. Dieses lässt sich nach dem heutigen Stand der Technik auch bei Dunkelheit realisieren, indem mit einer infrarotfähigen Kamera gearbeitet wird. Optional besteht die Möglichkeit, dass eine Kamera bei Manipulationsversuchen an der Schließanlage automatisch Fotos oder Videoaufnahmen erstellt. Diese Komfortfunktionen lassen sich unabhängig von den beschriebenen integrierten Zutrittskontrollvorrichtungen realisieren. Gleiches gilt z. B. für eine integrierte Gegensprechanlage, die ein Mikrofon und einen Lautsprecher aufweist und es mit Hilfe des Endgerätes ermöglicht, mit einem vor der Tür stehenden Nutzer/Gast zu kommunizieren. Optional besteht die Möglichkeit, den Nutzer/Gast über die Kamera zu sehen, so dass von innen bei Bedarf die Tür geöffnet werden kann. Optional oder ergänzend kann ein Bewegungssensor vorgesehen werden, über den erkannt werden kann, wenn sich eine Person der Gebäudetür nähert. Eine solche Näherung kann z. B. zur Auslösung der Beleuchtung eines Displays bzw. des Bedienfeldes des Kommunikationsmoduls dienen. Außerdem kann über einen solchen Bewegungssensor auch eine Kamera automatisch aktiviert werden.

Ferner können in das Kommunikationsmodul Anzeigemittel, z. B. Signal-Leuchtdioden integriert werden, über welche Funktionszustände angezeigt werden können.

Es besteht grundsätzlich die Möglichkeit, das Kommunikationsmodul mit einer eigenen Energieversorgung auszurüsten. Sofern das Kommunikationsmodul nicht im Türblatt, sondern im Türrahmen oder neben dem Türrahmen montiert wird, besteht optional die Möglichkeit, das Kommunikationsmodul unmittelbar kabelgebunden an eine externe Stromversorgung anzuschließen, so dass es dann zweckmäßig ist, das Kommunikationsmodul mit einem eigenen Netzteil auszurüsten.

Besonders bevorzugt schlägt die Erfindung jedoch vor, das Kommunikationsmodul ohne eigene Energieversorgung auszubilden, so dass es dann an die Energieversorgungseinheit der Schließeinrichtung angeschlossen wird. Dabei geht die Erfindung von der Erkenntnis aus, dass die Schließeinrichtung bzw. Schließanlage in der Regel mit einem Netzteil für die Energieversorgung der Schließanlage, z. B. für die Energieversorgung des Motors der Schließeinrichtung ausgerüstet ist. Das Kommunikationsmodul kann dann im Zuge der Montage mit einem solchen Netzteil verbunden werden. Dazu kann es unmittelbar mit dem Netzteil verkabelt werden. Optional besteht jedoch auch die Möglichkeit, das Kommunikationsmodul mit der Schließeinrichtung bzw. dem Motor der Schließeinrichtung zu verbinden und dort die Spannungsversorgung "abzugreifen". Sofern das Kommunikationsmodul in dem Türflügel bzw. das Türblatt integriert ist, muss sichergestellt sein, dass auch bei geöffneter Tür eine ausreichende Energieversorgung gewährleistet ist. Dieses lässt sich z. B. dadurch realisieren, dass über Kabel eine dauerhafte Stromversorgung zwischen Türrahmen und Türblatt und folglich zwischen dem im Bereich des Türrahmens angeordneten Netzteil und dem im Türblatt angeordneten Kommunikationsmodul gewährleistet ist. Besonders vorteilhaft wird jedoch erfindungsgemäß mit einer Federkontakteinheit zwischen Türblatt und Türrahmen gearbeitet, die z. B. aus der DE 203 03 780 U1 bekannt ist. In diesem Fall wird erfindungsgemäß eine ausreichende Pufferung zur Verfügung gestellt, z. B. durch einen Energiepufferspeicher. Dabei kann auf gegebenenfalls im Bereich der Schließeinrichtung ohnehin vorhandene Puffer zurückgegriffen werden. Alternativ kann aber auch das Kommunikationsmodul selbst mit einem Energiepufferspeicher, z. B. einem Akku oder einem ähnlichen Energiespeicher ausgerüstet werden.

Erfindungsgemäß wird das Kommunikationsmodul im Bereich der Gebäudetür, z. B. im Türflügel/Türblatt, installiert, so dass es von der Türaußenseite sichtbar und gegebenenfalls bedienbar ist. Dazu kann das Kommunikationsmodul z. B. in eine von der Türaußenseite zugängliche Montageausnehmung bzw. Montageöffnung oder Montagevertiefung in oder neben der Gebäudetür, z. B. in dem Türflügel eingesetzt werden. Dabei kann es vorteilhaft sein, wenn das Gehäuse eine Frontblende und ein rückseitiges Gehäuseteil aufweist, wobei die Frontblende mit ihrer Vorderseite von der Türaußenseite sichtbar ist und wobei das rückseitige Gehäuseteil in eine Montageöffnung einsetzbar ist. In die Frontblende bzw. die Frontplatte sind die verschiedenen Bedienelemente/Anzeigeelemente integriert, z. B. ein Zahlenbedienfeld, ein Fingerscanner usw..

Auch wenn in besonders bevorzugter Ausführungsform vorgesehen ist, dass ein oder mehrere Zutrittskontrollvorrichtungen (z. B. Fingerscanvorrichtungen) in das Kommunikationsmodul integriert werden, so liegt es optional außerdem im Rahmen der Erfindung, dass zusätzliche externe Zutrittskontrollvorrichtungen vorgesehen sind, die nicht in das Gehäuse des Kommunikationsmoduls integriert sind. Dabei kann es sich z. B. um Funk-Zutrittskontrollvorrichtungen handeln, die mit einem eigenen Sender für die Übermittlung eines Öffnungssignals per Funk ausgerüstet sind. Solche (separaten) Funk-Zutrittskontrolleinrichtungen können wie beim Stand der Technik in der Steuerung des Schlosses in herkömmlicher Weise angelernt werden. Bevorzugt liegt es jedoch im Rahmen der Erfindung, dass solche Funk-Zutrittskontrolleinrichtungen bzw. Funk-Schlüssel in dem Kommunikationsmodul gespeichert und folglich angelernt werden. Auf diese Weise wird die Funktionalität der grundsätzlich bekannten WLAN-Kommunikationseinheit erweitert, denn die grundsätzlich bekannten Funk-Zutrittskontrollvorrichtungen (z. B. Funk-Handsender, Funk-Transponder, Funk-Fingerscanvorrichtungen, Funk-Codeeingabeeinrichtungen) werden nicht mehr wie bisher in der Steuerung des Schlosses angelernt und gespeichert, sondern in dem Kommunikationsmodul. In dem Kommunikationsmodul werden folglich nicht nur die autorisierten (WLAN)Endgeräte, sondern auch die herkömmlichen Funk-Zutrittskontrollvorrichtungen angelernt, die mit dem Kommunikationsmodul nicht über das Funknetzwerk (WLAN), sondern über andere Funkprotokolle kommunizieren. Denn das Kommunikationsmodul weist nicht nur einen Sender für Funksignale von dem Kommunikationsmodul an die Steuerung, sondern einen Empfänger für den Empfang von Funksignalen der Zutrittskontrolleinrichtungen auf. Damit ist es möglich, die Funk-Zutrittskontrolleinrichtungen in dem Kommunikationsmodul anzulernen. Im Zuge des Betriebes wird dann von der jeweiligen Funk-Zutrittskontrolleinrichtung (z. B. dem Funk-Handsender) ein Öffnungsbefehl per Funk an das Kommunikationsmodul gesendet. Die Überprüfung der Berechtigung erfolgt dann in dem Kommunikationsmodul und im Falle einer positiv geprüften Berechtigung sendet das Kommunikationsmodul ein Öffnungssignal per Funk an den Empfänger der Steuerung. In dem Kommunikationsmodul werden folglich nicht mehr nur die funknetzwerkfähigen Endgeräte (z. B. Smartphones oder dergleichen) gespeichert und überprüft, sondern auch die grundsätzlich bekannten Funk-Zutrittskontrolleinrichtungen, die bislang im Stand der Technik in der Steuerung angelernt wurden.

Ergänzend kommt es jedoch erfindungsgemäß darauf an, dass nicht nur mit solchen externen Funk-Zutrittskontrolleinrichtungen gearbeitet wird, sondern dass in das Kommunikationsmodul in der bereits beschriebenen Weise selbst Zutrittskontrolleinrichtungen integriert sind, die sich sehr variabel in dem Kommunikationsmodul über die entsprechenden Endgeräte verwalten lassen.

Erfindungsgemäß sind folglich zumindest ein oder mehrere Endgeräte vorgesehen, die mit dem Kommunikationsmodul kommunizieren und mit denen eine Öffnung der Tür bewirkt werden kann. Bevorzugt sind außerdem Zutrittskontrolleinrichtungen vorgesehen, die in das Kommunikationsmodul integriert sind. Optional können darüber hinaus separate Funk-Zutrittskontrolleinrichtungen vorgesehen werden, die in dem Kommunikationsmodul angelernt werden. Bei Endgeräten handelt es sich um solche, die über das Funknetzwerk (insbesondere WLAN) mit dem Kommunikationsmodul kommunizieren, z. B. Smartphones oder dergleichen. Bei den Funk-Zutrittskontrolleinrichtungen handelt es sich um übliche Zutrittskontrolleinrichtungen, die ein Funksignal an den Empfänger der Kommunikationseinheit senden oder ein Funksignal von der Kommunikationseinheit empfangen.

Die Kommunikation der Endgeräte mit dem Kommunikationsmodul erfolgt bevorzugt via TCP/IP. Dabei wird als lokales Funknetzwerk bevorzugt ein WLAN nach dem Standard IEEE802.11 (z. B. mit Frequenzen von 2 bis 6 GHz) verwendet. Die Signale zwischen dem Kommunikationsmodul und der Steuerung und auch die Signale zwischen den gegebenenfalls vorhandenen Funk-Zutrittskontrolleinrichtungen und dem Kommunikationsmodul werden (herkömmlich) per Funk, z. B. mit einer Frequenz zwischen 400 MHz und 2500 MHz, z. B. 868,3 MHz übermittelt.

Das Kommunikationsmodul bildet einen Netzwerkserver, der mit Aktoren und Sensoren kommuniziert und Informationen über die Kommunikation über ein IP-Netzwerk aufbereitet (Gateway). In dem Kommunikationsmodul sind alle relevanten Informationen gespeichert. Die Darstellung und Manipulation der in dem Kommunikationsmodul enthaltenen Informationen durch autorisierte Benutzer erfolgt an dem Endgerät, welches als Netzwerkclient arbeitet. Bei diesen "Clients" handelt es sich um Endgeräte mit optischer Anzeige und/oder entsprechenden Eingabemöglichkeiten. Es kann sich um ein Mobiltelefon, insbesondere auch ein Smartphone oder um ein Tablet mit Touchdisplay oder auch ein PDA handeln. Alternativ kann auch ein Rechner, z. B. ein Arbeitsplatzrechner, ein Laptop oder ein Notebook (mit entsprechender Verwaltungssoftware, z. B. Browser) zum Einsatz kommen. Die Kommunikation zwischen Server und Client erfolgt z. B. über das TCP/IP-Protokoll, bevorzugt über WLAN und zweckmäßigerweise verschlüsselt. Eine Datenhaltung im Internet (in einer Cloud) ist nicht zwingend erforderlich.

Gegenstand der Erfindung ist nicht nur die beschriebene Schließanlage, sondern auch eine Türanordnung mit einer Gebäudetür und einer solchen Schließanlage. Die Schließanlage wird folglich auch im montierten Zustand in Kombination mit der Gebäudetür unter Schutz gestellt.

Im Folgenden wird die Erfindung anhand einer lediglich ein Ausführungsbeispiel darstellenden Zeichnung näher erläutert. Es zeigen:
- Fig. 1: eine erfindungsgemäße Schließanlage und deren Funktionsweise in schematischer Darstellung,
- Fig. 2: ein Kommunikationsmodul der Anlage nach Fig. 1 und
- Fig. 3: eine abgewandelte Ausführungsform des Gegenstandes nach Fig. 2.

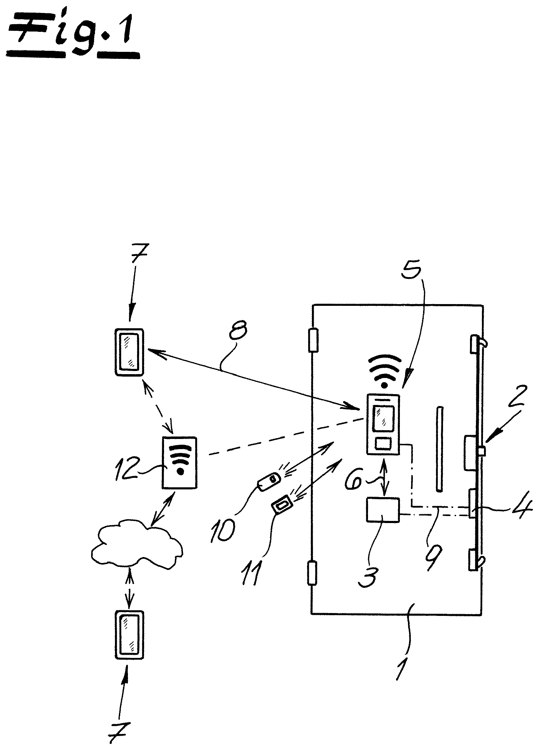

In Fig. 1 ist eine Schließanlage für eine Gebäudetür 1 mit einem motorbetriebenen Schloss 2 und einer Steuerung 3 dargestellt. Bei dem motorbetriebenen Schloss 2 handelt es sich besonders bevorzugt um eine Mehrfachverriegelung mit Zentralschloss oder einer oder mehreren Zusatzverriegelungen, welche über Treibstangen mit dem Zentralschloss verbunden sind. Das Schloss 2 ist mit einem Motor ausgerüstet. Dazu kann bevorzugt ein (separates) Motoraggregat 4 vorgesehen sein, welches ebenfalls über die Treibstangen mit der Zentralverriegelung und/oder den Zusatzverriegelungen verbunden ist. Über den Motor erfolgt zumindest eine Entriegelung des Schlosses 2. Die Verriegelung kann optional im Sinne einer Selbstverriegelung mechanisch erfolgen (halbmotorisches Schloss). Die Erfindung umfasst aber auch vollmotorische Schlösser, bei denen über den Motor sowohl die Verriegelung als auch die Entriegelung erfolgt. Die Steuerung 3 kann unmittelbar am Schloss (z. B. an oder in der Motoreinheit) angeordnet sein. In diesem Fall kann auch der Empfänger unmittelbar am Schloss (z. B. an oder in der Motoreinheit angeordnet sein oder als separates Empfängermodul an die Motoreinheit angeschlossen werden. Die Steuerung (mit Empfänger) kann jedoch auch als (separate) Steuerung am Türblatt oder am Türrahmen angeordnet sein und z. B. kabelgebunden mit dem Schloss bzw. dem Motoraggregat 4 verbunden sein.

Erfindungsgemäß ist in Funkreichweite der Steuerung 3 bzw. des Empfängers ein Kommunikationsmodul 5 angeordnet, das als Netzwerkserver dient und in ein lokales Funk-Netzwerk eingebunden ist. Ein solches Kommunikationsmodul 5 weist außerdem einen Sender für die Übermittlung eines Öffnungssignals 6 per Funk an den Empfänger der Steuerung 3 auf. Außerdem weist das Kommunikationsmodul 5 bevorzugt einen Empfänger für den Empfang von Funksignalen auf, z. B. von der Steuerung 3. Ein solches Kommunikationsmodul 5 wird folglich - so wie ein herkömmlicher Funkschlüssel - in der Steuerung als "berechtigter Benutzer" hinterlegt. Dazu können ein oder mehrere Endgeräte 7 (z. B. Smartphones) die als Netzwerkclients arbeiten, in dem Kommunikationsmodul angemeldet werden. Mit Hilfe eines solchen Endgerätes 7 kann ein Öffnungsbefehl 8 an das Kommunikationsmodul 5 übermittelt werden, wobei daraufhin von dem Kommunikationsmodul 5 ein Öffnungssignal 6 an die Steuerung 3 übermittelt wird. Die Kommunikation zwischen dem Endgerät 7 und dem Kommunikationsmodul 5 erfolgt dabei über die WLAN-Technik. In dem Endgerät 7 (z. B. Smartphone) ist eine geeignete Anwendungssoftware (z. B. eine App) installiert, über welche eine einfache Bedienung und insbesondere Benutzerverwaltung möglich ist. So können eine Vielzahl von Endgeräten 7 in dem Kommunikationsmodul 5 angelernt und über die Endgeräte 7 verwaltet werden. So lassen sich für eine Vielzahl von Smartphones oder dergleichen individuelle Benutzerberechtigung zur Schaltung/Nutzung von Aktoren festlegen oder auch temporäre Vorgaben bzw. Sperrungen realisieren. In der Fig. 1 ist dabei gezeigt, dass das Kommunikationsmodul 5 als WLAN-Accesspoint mit dem Endgerät 7 kommunizieren kann, ohne dass ein weiteres WLAN zur Verfügung stehen muss. Über das Endgerät 7 kann der Nutzer in den WLAN-Einstellungen das Endgerät 7 mit dem Kommunikationsmodul 5 verbinden und dann über die App ohne Einschränkungen darauf zugreifen. So kann eine schnelle und einfache Nutzung ohne bestehendes WLAN erfolgen. Alternativ ist jedoch in den Figuren auch gezeigt, dass die Kommunikationseinheit 5 in ein bestehendes WLAN mit Accesspoint/Router 12 integriert werden kann. In diesem Fall kann das Endgerät 7 auch über den WLAN-Accesspoint 12 mit der Kommunikationseinheit 5 kommunizieren. Außerdem besteht die Möglichkeit, dass ein Endgerät 7 über das Internet und über den Accesspoint/Router 12 mit der Kommunikationseinheit 5 kommuniziert.

Erfindungsgemäß ist das Kommunikationsmodul 5 als Türmodul ausgebildet und derart im Bereich der Gebäudetür befestigt, dass es von der Türaußenseite sichtbar und bedienbar ist. In dem dargestellten Ausführungsbeispiel ist das Kommunikationsmodul 5 als Türflügelmodul ausgebildet und an den Türflügel der Gebäudetür 1 befestigt und von der Türflügelaußenseite sichtbar und bedienbar. Das Kommunikationsmodul 5 wird folglich nicht separat außerhalb der Tür 1, z. B. in einem Innenraum installiert und an eine Netzsteckdose angeschlossen, sondern erfindungsgemäß ist das Kommunikationsmodul 5 als Türmodul unmittelbar in den Türflügel integriert. Dazu ist es im Ausführungsbeispiel auch nicht mit einer eigenen Energieversorgung ausgerüstet, sondern es wird an die Energieversorgungseinheit der Schließeinrichtung angeschlossen. In dem dargestellten Ausführungsbeispiel wird das Kommunikationsmodul 5 über ein Versorgungskabel 9 an die Energieversorgung der Schließanlage oder - so wie in Fig. 1 angedeutet - an das Motoraggregat 4 angeschlossen, welches selbst mit der Energieversorgung bzw. dem Netzteil der Schließanlage verbunden ist.

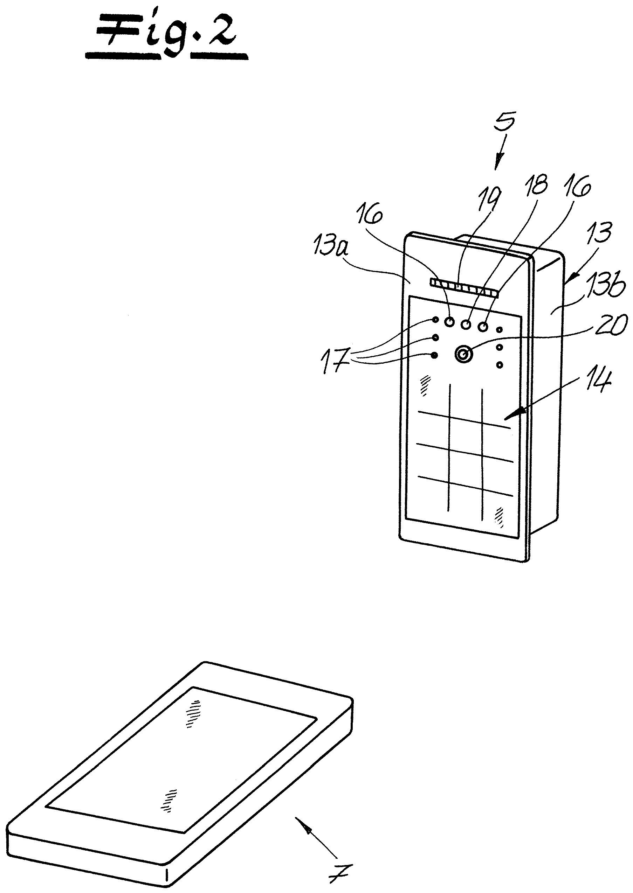

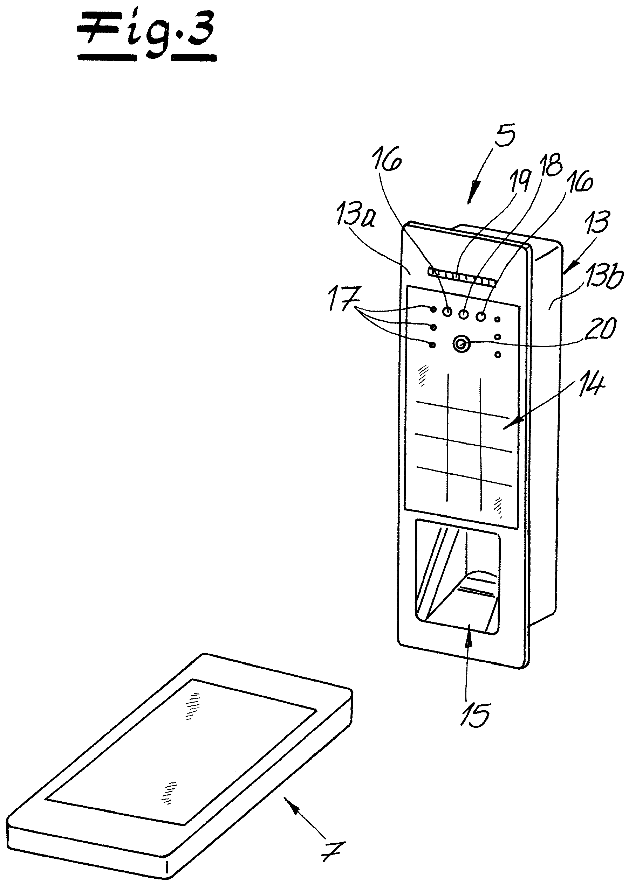

Fig. 2 und Fig. 3 zeigen Ausführungsformen des Kommunikationsmoduls 5, bei denen in das Gehäuse 13 eine oder mehrere Zutrittskontrollvorrichtungen integriert sind. Fig. 2 zeigt dabei eine Ausführungsform, bei welcher eine Codeeingabeeinrichtung 14 als Zutrittskontrollvorrichtung in das Kommunikationsmodul 5 integriert ist. Fig. 3 zeigt eine weitere Ausführungsform, bei der zusätzlich zu der Codeeingabeeinrichtung 14 eine Fingerscanvorrichtung 15 in das Gehäuse 13 integriert ist. Diese Zutrittskontrollvorrichtungen 14, 15 ermöglichen es, dass ein Benutzer die Schließanlage auch ohne ein Endgerät 7 direkt entriegeln bzw. öffnen kann. Besonders vorteilhaft ist dabei die Tatsache, dass eine Vielzahl von Berechtigungen der in das Modul integrierten Zutrittskontrollvorrichtungen 14, 15 mehrerer Nutzer über das Endgerät 7 programmiert werden können und in dem Kommunikationsmodul 5 gespeichert werden. Auf diese Weise lassen sich verschiedene Benutzer sehr variabel anlegen und verwalten. Im Falle der in Fig. 2 dargestellten Codeeingabeeinrichtung 14 lassen sich verschiedene Codes verschiedener Nutzer über das Endgerät 7 verwalten und in dem Kommunikationsmodul 5 speichern. Dabei können für einzelne Codes unterschiedliche Berechtigungen, z. B. zeitlich begrenzte Berechtigungen hinterlegt werden.

Bei der in Fig. 3 dargestellten Fingerscanvorrichtung 15 können über das Endgerät 7 einzelne Benutzerfinger angelegt und verwaltet werden. Einzelne Finger können bei Bedarf gesperrt und gelöscht werden und einzelnen Fingern können unterschiedliche Öffnungszeiten zugeteilt werden.

Außerdem ist in den Figuren erkennbar, dass weitere Funktionen bzw. Komponenten in das Gehäuse 13 des Kommunikationsmoduls 5 integriert werden können. So sind z. B. Leuchtdioden 16 vorgesehen, über welche verschiedene Funktionszustände der Einheit angezeigt werden können. Ergänzend können Infrarotleuchtdioden 17 für eine Nachtsicht vorgesehen sein. Ferner kann eine Gegensprechanlage 19 mit Mikrofon und Lautsprecher vorgesehen sein. Eine solche Gegensprechanlage ermöglicht es, mit Hilfe eines Endgerätes mit einem vor der Tür stehenden Gast zu sprechen und bei Bedarf die Türe zu öffnen. Optional kann auch eine Kamera 20 vorgesehen sein. Über diese Kamera 20 kann man z. B. ebenfalls über ein Endgerät 7 erkennen, wenn eine Person vor der Tür 1 steht, z. B. nachdem diese geklingelt hat. Dieses funktioniert auch bei Dunkelheit. Auch hier kann bei Bedarf eine Öffnung der Tür ausgelöst werden. Eine solche Kamera 20 kann alternativ auch als Zutrittskontrollvorrichtung mit Gesichtserkennung eingesetzt werden. Ferner kann ein Bewegungssensor 18 vorgesehen sein.

Das Gehäuse 13 weist eine Frontblende 13a und ein rückseitiges Gehäuseteil 13b auf. Das Kommunikationsmodul 5 kann dabei so installiert werden, dass die Frontblende entweder außenseitig auf der Außenseite des Türflügels aufliegt oder auch bündig mit der Außenfläche des Türflügels abschließt. Das rückseitige Gehäuseteil 13b bietet ausreichend Bauraum für die erforderlichen Komponenten. Dieses rückseitige Gehäuseteil 13b kann dann in einer Montageöffnung des Türflügels versenkt werden.

Auch wenn es erfindungsgemäß besonders bevorzugt Zutrittskontrolleinrichtungen unmittelbar in das Kommunikationsmodul 5 integriert werden, können optional oder ergänzend auch herkömmliche Zutrittskontrolleinrichtungen als Funk-Zutrittskontrolleinrichtungen vorgesehen werden. So sind in Fig. 1 als herkömmliche Funk-Zutrittskontrolleinrichtungen 10, 11 beispielhaft einerseits ein Funk-Handsender 10 und andererseits eine Funk-Fingerscaneinrichtung 11 angedeutet. Diese Zutrittskontrolleinrichtungen 10, 11 müssen nun jedoch nicht in herkömmlicher Weise in der Steuerung 3 des Schlosses angelernt werden, sondern sie können ebenfalls in dem Kommunikationsmodul 5 angelernt werden. Einzelheiten sind nicht dargestellt.

Die erfindungsgemäße Schließanlage lässt sich - hinsichtlich der Öffnung über das Endgerät 7 - auf unterschiedliche Weise betreiben bzw. einrichten. So besteht die in Fig. 1 dargestellte Möglichkeit, dass das Endgerät 7 in dem Kommunikationsmodul 5 angemeldet wird bzw. alternativ und bevorzugt ein Benutzer mit einer Kombination aus Benutzername und Kennwort angemeldet wird. Mittels Endgerät 7 übermittelt der Benutzer dann einen Öffnungsbefehl 8 an das Kommunikationsmodul 5, woraufhin von dem Kommunikationsmodul 5 ein Öffnungssignal 6 an die Steuerung 3 übermittelt wird. Optional besteht zur Verbesserung der Sicherheit die Möglichkeit, dass im Bereich der Gebäudetür 1 eine Betätigungseinrichtung, z. B. ein Taster oder Sensor angeordnet ist, wobei diese Betätigungseinrichtung einen Sender für die Übermittlung eines Betätigungssignals an die Steuerung oder an das Kommunikationsmodul 5 aufweist. Dadurch lässt sich die Sicherheit der Schließanlage verbessern, denn die Steuerung entriegelt das Schloss nur dann, wenn sowohl ein Öffnungsbefehl 8 von dem Endgerät 7 an das Kommunikationsmodul 5 übermittelt wird als auch ein Betätigungssignal von der Betätigungseinrichtung an die Steuerung oder an die Kommunikationseinheit übermittelt wird. Das Schloss wird folglich nicht bereits dann entriegelt, wenn ein berechtigter Nutzer einen Öffnungsbefehl 8 über z. B. ein Smartphone an die Kommunikationseinheit übermittelt. Vielmehr ist für die Entriegelung bei einer solchen Ausführungsform außerdem eine "Vor-Ort-Willensbekundung" erforderlich, indem z. B. eine Taste an der Tür oder im Türgriff oder eine Berührung der Griffstange erforderlich wird. In einer abgewandelten Ausführungsform kann auch ein "keyless entry-System" realisiert werden. Dazu wird das Endgerät 7 als Netzwerkclient in dem Kommunikationsmodul 5 als autorisiert gespeichert bzw. hinterlegt. Die Steuerung 3 entriegelt das Schloss 2, nachdem ein autorisiertes Endgerät 7, welches zuvor als autorisiertes Endgerät registriert wurde, in dem Kommunikationsmodul 5 und folglich im Funknetzwerk angemeldet wird. Nähert sich folglich ein Benutzer mit einem autorisierten Endgerät der Gebäudetür 1 und gelangt dann in die Reichweite des Funknetzwerkes, so kann automatisch eine Entriegelung des Schlosses 2 erfolgen, ohne dass zwingend weitere Handlungen notwendig sind. Optional kann es jedoch vorteilhaft sein, dass die Entriegelung des Schlosses nicht bereits dann erfolgt, wenn das Endgerät in die Reichweite des Funknetzwerkes gelangt und folglich angemeldet wird, sondern wenn außerdem eine Bestätigung durch eine weitere Aktion erforderlich wird. Dieses kann wiederum über eine Betätigungseinrichtung, z. B. ein Sensor, eine Taste oder die Griffstange der Tür realisiert werden. Mit einer solchen Betätigungseinrichtung wird wiederum ein Betätigungssignal erzeugt und an die Steuerung oder an das Kommunikationsmodul übermittelt. In diesem Fall entriegelt die Steuerung das Schloss nur dann, wenn ein Betätigungssignal an die Steuerung oder das Kommunikationsmodul 5 übermittelt wird, während zumindest ein autorisiertes Endgerät 7 in dem Kommunikationsmodul 5 angemeldet ist. Eine aktive Handlung am Endgerät 7, z. B. das aktive Senden eines Öffnungsbefehls, ist bei dieser Ausführungsform jedoch nicht erforderlich.

Bei dem beschriebenen Ausführungsbeispiel erfolgt die Kommunikation zwischen dem Kommunikationsmodul 5 und der Steuerung 3 drahtlos, so dass das Öffnungssignal 6 per Funk an die Steuerung 3 übermittelt wird. Die Erfindung umfasst grundsätzlich aber auch Ausführungsformen, bei denen das Öffnungssignal kabelgebunden an die Steuerung bzw. die Schließeinrichtung übertragen wird.

## Patentansprüche

1. Schließanlage für eine Gebäudetür (1) mit zumindest
- einer Schließeinrichtung, z. B. einem motorbetriebenen Schloss (2),
- einer Steuerung (3) für die Schließeinrichtung,
- einem Kommunikationsmodul (5) als Netzwerkserver, welches ein Gehäuse (13) aufweist und welches in ein lokales Funknetzwerk eingebunden ist oder ein solches aufspannt und mit dem ein Öffnungssignal (6) an die Steuerung (3) übermittelbar ist und
- zumindest einem als Netzwerkclient arbeitenden Endgerät (7), welches in dem Kommunikationsmodul (5) angemeldet wird oder als autorisiert gespeichert ist,
**dadurch gekennzeichnet, dass** das Kommunikationsmodul (5) als Türmodul ausgebildet und derart an oder neben der Gebäudetür befestigbar ist, dass es von der Türaußenseite sichtbar ist.

2. Schließanlage nach Anspruch 1, **dadurch gekennzeichnet, dass** die Steuerung (3) einen Empfänger für den Empfang eines Öffnungssignals (6) per Funk aufweist und dass das Kommunikationsmodul (5) in Reichweite der Steuerung (3) bzw. des Empfängers angeordnet ist, wobei das Kommunikationsmodul (5) außerdem einen Sender für die Übermittlung des Öffnungssignals (6) per Funk an den Empfänger der Steuerung (3) aufweist.

3. Schließanlage nach Anspruch 1 oder 2, **dadurch gekennzeichnet, dass** das Kommunikationsmodul (5) als Türflügelmodul an dem Türflügel der Gebäudetür (1) befestigbar und von der Flügelaußenseite sichtbar und gegebenenfalls bedienbar ist.

4. Schließanlage nach einem der Ansprüche 1 bis 3, **dadurch gekennzeichnet, dass** in das Gehäuse (13) des Kommunikationsmoduls (5) zumindest eine von einem Nutzer betätigbare Zutrittskontrollvorrichtung (14, 15) für die Schließeinrichtung integriert ist, mit welcher ein Öffnungssignal (6) für die Schließeinrichtung erzeugbar ist.

5. Schließanlage nach Anspruch 4, **dadurch gekennzeichnet, dass** als Zutrittskontrollvorrichtung (14, 15) zumindest eine Codeeingabeeinrichtung (14) und/ oder eine Fingerscanvorrichtung (15) in das Gehäuse (13) des Kommunikationsmoduls (5) integriert ist/sind.

6. Schließanlage nach Anspruch 4 oder 5, **dadurch gekennzeichnet, dass** die Berechtigungen der in das Kommunikationsmodul (5) integrierten Zutrittskontrollvorrichtungen (14, 15) mehrerer Nutzer über das Endgerät (7) programmierbar und in dem Kommunikationsmodul (5) speicherbar sind.

7. Schließanlage nach einem der Ansprüche 1 bis 6, **dadurch gekennzeichnet, dass** das Kommunikationsmodul (5) ohne eigene Energieversorgung ausgebildet und an die Energieversorgungseinheit der Schließeinrichtung angeschlossen oder anschließbar ist.

8. Schließanlage nach Anspruch 7, **dadurch gekennzeichnet, dass** in das Kommunikationsmodul (5) ein Energiepufferspeicher integriert ist.

9. Schließanlage nach einem der Ansprüche 1 bis 8, **dadurch gekennzeichnet, dass** in oder an dem Gehäuse (13) des Kommunikationsmoduls (5) eine Videokamera (20), eine Gegensprechanlage (19) und/oder ein Bewegungssensor (18) angeordnet sind.

10. Schließanlage nach einem der Ansprüche 1 bis 9, **dadurch gekennzeichnet, dass** das Gehäuse (13) des Kommunikationsmoduls (5) eine Frontblende (13a) und einen rückseitigen Gehäuseteil (13b) aufweist, welcher in eine Montageöffnung in oder neben der Gebäudetür, z. B. in dem Türflügel, einsetzbar ist.

11. Türanordnung mit einer Gebäudetür (1) und einer Schließanlage nach einem der Ansprüche 1 bis 10.
